# EUROPÄISCHE PATENTSCHRIFT

(11) **EP 0 940 651 B1**
(45) Veröffentlichungstag und Bekanntmachung des Hinweises auf die Patenterteilung: **26.03.2008**
(21) Anmeldenummer: 99102435.7
(22) Anmeldetag: 09.02.1999
(51) Int. Cl.: G01B 5/008, G01B 7/008

(54) **Koordinatenmessgerät mit Benutzerführung**
Coordinate measuring apparatus with user guide
Appareil de mesure de coordonnée avec guide pour utilisateur

(30) Priorität: 06.03.1998 DE 19809690
(43) Veröffentlichungstag der Anmeldung: 08.09.1999
(73) Patentinhaber: Carl Zeiss Industrielle Messtechnik GmbH, 73447 Oberkochen (DE)
(72) Erfinder: Götz, Klaus-Dieter, 74372 Sersheim (DE); Ruck, Otto, 73479 Pfahlheim (DE)
(74) Vertreter: Henckell, Carsten

(56) Entgegenhaltungen:
- EP-A- 0 763 711
- EP-A- 0 784 253
- WO-A-98/37484
- US-A- 5 659 480
- PATENT ABSTRACTS OF JAPAN vol. 015, no. 439 (P-1273), 8. November 1991 (1991-11-08) & JP 03 185308 A (NIKON CORP), 13. August 1991 (1991-08-13)
- PATENT ABSTRACTS OF JAPAN vol. 1996, no. 11, 29. November 1996 (1996-11-29) & JP 08 193829 A (MITSUTOYO CORP), 30. Juli 1996 (1996-07-30)
- PATENT ABSTRACTS OF JAPAN vol. 006, no. 252 (P-161), 10. Dezember 1982 (1982-12-10) & JP 57 148209 A (TOYODA KOKI KK), 13. September 1982 (1982-09-13)

## Beschreibung

Die nachfolgend beschriebene Erfindung beschreibt ein Koordinatenmeßgerät mit wenigstens einer Tasteinheit zum Abtasten eines zu vermessenden Werkstückes, einer Mechanik über die die Tasteinheit in den drei Koordinatenrichtungen bewegt werden kann, mehreren Antrieben, über die die Mechanik zur Bewegung der Tasteinheit angetrieben wird und wenigstens einem manuell betätigbaren Bedienelement, mit dem die Antriebe gesteuert werden können.

Ein derartiges Koordinatenmeßgerät ist beispielsweise aus der europäischen Patentschrift EP 252 212 B1 bekannt. Dieses weist hierbei eine portalförmige Mechanik auf. Diese umfaßt ein Portal, das einen Meßtisch, auf dem das zu vermessende Werkstück gelagert ist, überspannt. Das Portal kann über einen entsprechenden Antrieb in einer ersten Koordinatenrichtung gegenüber dem Meßtisch verfahren werden. Im überspannenden Bereich des Portals weist die besagte portalförmige Mechanik zusätzlich einen Querschlitten auf, der mittels eines weiteren Antriebs entlang dem überspannenden Bereich des Portals in einer zweiten Koordinatenrichtung verfahren werden kann, wobei innerhalb des Querschlittens wiederum eine Pinole über einen dritten Antrieb in vertikaler Richtung also der dritten Koordinatenrichtung verfahrbar ist. Am Ende der Pinole ist hierbei eine Tasteinheit zum Abtasten eines auf dem Werkstücktisch gelegenen Werkstückes vorgesehen.

Zur Bedienung des Koordinatenmeßgerätes ist ein Bedienelement vorgesehen, über das die entsprechenden Antriebe in der gezeigten Mechanik angetrieben werden können, so daß hierdurch die Tasteinheit in allen drei Koordinatenrichtungen verfahren werden kann.

Das gezeigte Koordinatenmeßgerät weist hierbei folgende Besonderheiten auf. So ist die Rückstellkraft des Bedienelements bei einer Auslenkung aus seiner Ruhelage bedingt durch Federn, die das Bedienelement in seine Ruhelage zurückziehen, immer proportional zum ausgelenkten Weg. Hierdurch ist es für den Bediener möglich, das Bedienelement beliebig weit auszulenken. Da bei dem gezeigten Bedienelement üblicherweise proportional zur Auslenkung aus seiner Ruhelage die entsprechende Geschwindigkeit der Antriebe für die Mechanik in der betreffenden Koordinatenrichtung vorgegeben wird, ist es für den Bediener mühelos möglich, hohe Anfahr- oder Bremsbeschleunigungen zu generieren, die zu einer schnellen Abnutzung der Mechanik oder sogar zur Zerstörung der Mechanik führen können.

Eine andere Eigenschaft des Koordinatenmeßgerätes ist es, daß es bei der Verwendung von filigranen Taststiften bei der Antastung eines Werkstückes zu einer Zerstörung des Tasters kommen kann, da der Bediener mühelos das Bedienelement betätigen kann ohne hierbei die am Taster wirkenden Kräfte zu realisieren.

In anderen Meßaufgaben ist es oftmals für den Bediener erforderlich, daß der Bediener die besagte Mechanik in mehreren Achsen gleichzeitig verfährt, um die Tasteinheit beispielsweise entlang eines raumschräg ausgerichteten Taststrahls zu bewegen. Eine exakte Steuerung der Tasteinheit entlang dieser raumschrägen Richtung ist mit dem Bedienelement o.g. Koordinatenmeßgerätes jedoch nahezu unmöglich.

Aufgabe der vorliegenden Erfindung ist es deshalb ein Koordinatenmeßgerät vorzuschlagen, bei dem die bei konkreten Meßaufgaben auftretenden Problemstellungen für den Bediener des Koordinatenmeßgerätes erfaßbar sind.

Die Aufgabe wird gemäß den Merkmalen des unabhängigen Anspruches 1 gelöst.

Der besondere Grundgedanke unserer Erfindung ist hierbei darin zu sehen, daß auf das Bedienelement spezifischen Gegebenheiten im Meßablauf entsprechend durch eine Krafteinheit eine Kraft aufgeschaltet werden kann.

Hierdurch ergibt sich der besondere Vorteil, daß die spezifischen Gegebenheiten im Meßablauf auf dem Bedienelement für den Benutzer spürbar abgebildet werden. Der Benutzer kann hierbei bei der Bedienung des Bedienelementes direkt über die auf das Bedienelement aufgeschaltete Kraft bei der Bedienung des Koordinatenmeßgerätes geführt werden.

Es sind zwar aus dem Stand der Technik bereits ähnliche Systeme bekannt. Beispielsweise zeigt die GB 2 298 931 A den Einsatz von manuellen Bedienelementen, auf die eine Kraft aufgeschaltet wird. Diese Bedienelemente werden für die Navigation von diversen Gegenständen verwendet. Hierbei werden auf den Steuerknüppel Reaktionskräfte aufgeschaltet, die beim Berühren von virtuell in einem Computerprogramm aufgestellten Barrieren erzeugt werden oder als Feedback auf das Signal eines Kraftsensors erzeugt werden, der an einer echten Barriere anstößt. Diesbezüglich ist jedoch auszuführen, daß es sich hierbei um keine Koordinatenmeßgeräte handelt und somit die spezifischen, bei dem Einsatz solcher manuellen Bedienelemente in einem Koordinatenmeßgerät vorkommenden Problemstellungen nicht berücksichtigt sind.

Zu einem Koordinatenmeßgerät gemäß dem Anspruch 1 ist hierbei folgendes zu sagen.

So ist das Koordinatenmeßgerät keineswegs auf die weiter unten beschriebenen Ausführungsformen beschränkt sondern kann selbstverständlich auch vollkommen andere Gestalten annehmen.

Beispielsweise kann es sich bei der besagten Tasteinheit um beliebige Sensoren handeln, mit denen ein Werkstück abgetastet werden kann. Es können also beispielsweise optische Tastköpfe, messende Tastköpfe mit entsprechenden Tastern, schaltende Tastköpfe mit entsprechenden Tastern etc. vorgesehen sein.

Auch bei der Mechanik kann es sich selbstverständlich um eine beliebige Mechanik handeln. Beispielsweise kann anstelle des hier beispielhaft gezeigten Portalaufbaus selbstverständlich auch jeder beliebige andere Aufbau von Koordinatenmeßgeräten verwendet werden. Beispielsweise ist genauso ein Ständeraufbau möglich, bei dem ein vertikal ausgerichteter Ständer in einer ersten Koordinatenrichtung entlang eines Meßtisches verfahren werden kann. An dem besagten Ständer ist vertikal beweglich in einer zweiten Koordinatenrichtung ein sogenannter Kreuzschieber geführt, an dem wiederum horizontal beweglich in der dritten Koordinatenrichtung ein Meßarm geführt ist, an dessen Ende die besagte Tasteinheit befestigt ist.

Auch die Antriebe zum Antrieb der Mechanik können hierbei unterschiedlich ausgestaltet sein. Es kann sich beispielsweise um sogenannte Reibradantriebe handeln, bei denen ein elektromotorisch angetriebenes Reibrad sich auf einer entsprechenden hiermit zusamenwirkenden Lauffläche abstützt. Es können genau so gut jedoch auch Spindelantriebe, Zahnstangenantriebe etc. verwendet werden.

Auch bei den Bedienelementen kann es sich um die unterschiedlichsten Ausführungsvarianten handeln. Bereits bei der Bedienform gibt es eine Vielzahl an unterschiedlichen Varianten. So gibt es beispielsweise Bedienelemente, bei denen die Verstellung der Mechanik in der betreffenden Koordinatenrichtung proportional zur Verstellung des Bedienelementes erfolgt. Beispielsweise kann es sich hierbei um ein Handrad mit einem hieran angebrachten Drehgeber oder um einen linear verstellbaren Schieber mit einer Einrichtung zur Messung der Schieberstellung handeln, wobei in Abhängigkeit von der Drehstellung des Drehgebers oder des Schiebers die Mechanik in der betreffenden Koordinatenrichtung verfahren wird.

In einer anderen Variante von Bedienelementen wird die Geschwindigkeit oder sogar die Beschleunigung der Mechanik in der betreffenden Koordinatenrichtung proportional zur Auslenkung des Bedienelementes aus seiner Ruhelage heraus eingestellt. Das Charakteristikum derartiger Bedienelemente ist, daß sie üblicherweise durch entsprechende Rückstellelemente in ihre Neutrallage zurückgezogen werden. Derartige Bedienelemente sind beispielsweise Steuerknüppel, die ähnlich den heute bei Computer üblichen Joysticks aufgebaut sind oder Handräder, die an entsprechende Drehgeber angeschlossen sind und die über entsprechende Rückstellelemente immer in eine definierte Winkelstellung zurückgezogen werden.

Zur variablen Aufschaltung der Kraft auf die Bedienelemente mit der Krafteinheit gibt es hierbei unterschiedliche Möglichkeiten. Üblicherweise wird man als Krafteinheit magnetisch arbeitende Elemente nutzen, um die besagte Kraft zu erzeugen. Es soll an dieser Stelle ausdrücklich darauf hingewiesen werden, daß der Begriff "Kraft" natürlich auch das Drehmoment beispielsweise an einem Handrad miterfaßt, da zur Erzeugung eines Drehmomentes auch eine Kraft erforderlich ist. Dies kann im einfachsten Fall mit einem Elektromotor geschehen, der entsprechend der gewünschten Kraft ein Drehmoment auf das Bedienelement aufschaltet.

Neben dieser prinzipiell sehr einfachen Möglichkeit gibt es selbstverständlich auch noch andere Möglichkeiten zur Ausgestaltung der Krafteinheit, um entsprechend Kräfte auf die Bedienelemente aufzuschalten. Es sind beispielsweise auch Pneumatiken denkbar, bei denen über die Aufschaltung eines entsprechenden Druckes die besagte Kraft erzeugt werden könnte. Beispielsweise wären hierbei bei einem Handrad als Bedienelement zwei pneumatische Zylinder denkbar, die je über ein Seil mit der Welle des Handrades verbunden sind. Das Seil des einen Zylinders könnte hierbei auf eine entsprechende mit der Welle verbundene Scheibe in einer ersten Drehrichtung aufgewickelt sein und an seinem Ende an der Scheibe befestigt sein. Das Seil des zweiten Zylinders wäre an einer zweiten mit der Welle verbundenen Scheibe in einer anderen Drehrichtung aufgewickelt und am Ende befestigt. Zum Aufschalten einer Kraft könnte dann jeweils der betreffende Zylinder mit einem entsprechenden Luftdruck beaufschlagt werden.

Die Bedienelemente stehen hierbei in Wirkverbindung mit einer Funktionsbaugruppe, die einerseits die von den Drehgebern der Bedienelemente kommenden Signale weiter verarbeiten und andererseits auch die Kraftaufschaltung auf die Bedienelemente steuert. Diese Funktionsbaugruppe kann, wie dies in allen unseren Beispielen gezeigt ist, ein autarkes Element in Form beispielsweise eines Controllers sein oder aber natürlich aus einer Vielzahl von Einzelelementen bestehen, die sich möglicherweise auch in der Steuerung oder im Rechner des Koordinatenmeßgerätes befinden können.

Bei der Vorgehensweise, wie diese Kraft auf das Bedienelement aufgeschaltet wird, gibt es unterschiedliche Ausführungsformen.

Gemäß einer ersten Ausführungsform wird die Kraft proportional zur Beschleunigung der Mechanik in der betreffenden Koordinatenrichtung auf das Bedienelement aufgeschaltet. Hierdurch wird für den Bediener des Koordinatenmeßgerätes erfaßbar, wie hoch die von ihm eingestellte Beschleunigung ist, so daß der Bediener bei hohen Beschleunigungen - seien dies nun Anfahr- oder Bremsbeschleunigungen - ein gewisses Gefühl für diese Beschleunigung erhält.

In einer Weiterbildung wird die Kraft sogar näherungsweise proportional der bei der Beschleunigung der Mechanik auftretenden Massenträgheitskraft gewählt. Dies hat den Vorteil, daß insbesondere auch ein Gefühl für die entstehenden Massenträgheitskräfte vermittelt wird. Bezogen auf ein Koordinatenmeßgerät vom Portaltyp bedeutet dies beispielsweise, daß selbstverständlich die Bewegung der leichten Pinole in der vertikalen Koordinatenrichtung erheblich unkritischer ist als die Bewegung des gesamten Portals in der horizontalen Koordinatenrichtung, da das Portal mit dem Querschlitten, der Pinole und der Tasteinheit natürlich erheblich mehr Masse aufweist, als die Pinole, mit der hieran befestigten Tasteinheit, so daß die Massenträgheitskräfte bei gleicher Beschleunigung erheblich unterschiedlich sind.

Die auf das Bedienelement aufzuschaltende Kraft kann hierbei ermittelt werden, indem beispielsweise aus den betreffenden Signalen der Antriebe oder aus einem im Bereich der Tasteinheit angebrachten Beschleunigungssensor jeweils die Beschleunigung der Mechanik in den Koordinatenrichtungen gemessen wird und bei Bedarf mit den entsprechenden in der betreffenden Koordinatenrichtung zu beschleunigenden Massen der Mechanik multipliziert wird.

In einer erheblich einfacheren Ausführungsform kann das Beschleunigungs- und Bremsverhalten der Mechanik des Koordinatenmeßgerätes auch durch eine entsprechende Differentialgleichung beispielsweise in besagter Funktionsbaugruppe simuliert werden, so daß hinsichtlich der tatsächlichen Beschleunigung der Mechanik bzw. der Tasteinheit überhaupt keine Daten aufgenommen werden müssen.

Für ein Bedienelement, bei dem die Verstellung der Mechanik in der betreffenden Koordinatenrichtung proportional zur Verstellung des Bedienelementes erfolgt, kann die Beschleunigung bzw. die Massenträgheitskraft sogar einfachst ohne jeglichen Rechenaufwand simuliert werden, in dem das Bedienelement unmittelbar mit einer zu beschleunigenden Masse, gewissermaßen einer Schwungmasse gekoppelt wird, die bei der Betätigung des Bedienelementes beschleunigt wird und damit als besagte Krafteinheit wirkt. Dies hat den besonderen Vorteil, daß zumindest nicht notwendigerweise ein aufwendiges Element im Bedienelement vorgesehen werden muß, das die Kraft aufschaltet, da die Kraft durch die Beschleunigung der betreffenden Masse erzeugt wird.

Die Masse kann hierbei entweder starr mit dem Bedienelement oder über ein Getriebe mit dem Bedienelement verbunden sein. Für den Fall, daß die Masse starr mit dem Bedienelement verbunden ist, handelt es sich bei der Masse beispielsweise um eine Scheibe, die an der Welle eines Handrades befestigt ist.

Ist die Masse über ein Getriebe mit dem Bedienelement verbunden, so kann diese entweder linear bewegt werden, indem an der Welle des Handrades ein Zahnrad befestigt ist, das in eine entsprechende Zahnstange, an der die Masse befestigt ist, eingreift oder rotiert werden, wobei dann das an der Welle des Handrades befestigte Zahnrad in ein entsprechendes mit einer Schwungscheibe verbundenes Zahnrad eingreift.

In einer grundsätzlich zweiten Ausführungsform kann die Aufschaltung der Kräfte auf das Bedienelement auch dazu verwendet werden, um den Bediener des Koordinatenmeßgerätes auf einfache Weise zum Verfahren der Tasteinheit in einer beliebigen, vorzugsweise von den Koordinatenrichtungen abweichenden Richtung zu bewegen. Dazu sollte üblicherweise wenigstens ein Bedienelement bzw. zwei Bedienelemente vorgesehen sein, mit dem/denen die Tasteinheit in wenigstens zwei unterschiedlichen Koordinatenrichtungen gesteuert werden kann. Die Kraft wird dann so auf das bzw. die Bedienelemente aufgeschaltet, daß sich hierbei wenigstens eine Vorzugsrichtung ergibt, in die das bzw. die Bedienelemente vorzugsweise betätigt werden können.

Die Vorzugsrichtung wird genutzt um ein Verfahren der Tasteinheit in wenigstens einer definierten Verfahrrichtung zu ermöglichen, wie dies Anspruch 11 zeigt. Die Funktionsbaugruppe schaltet bei einer Auslenkung wenigstens eines Bedienelementes entsprechend der Auslenkung die besagte Kraft so auf das bzw. die Bedienelemente auf, daß sich ein der Vorzugsrichtung entsprechendes konstantes Verhältnis zwischen den Auslenkungen des bzw. der Bedienelemente für die unterschiedlichen Koordinatenrichtungen ergibt. Um dies dem Leser bildlich zu verdeutlichen, soll diese Vorgehensweise rein beispielhaft anhand eines Beispiels dargestellt werden. Soll die Tasteinheit beispielsweise unter einem Winkel in der X-Y-Ebene verfahren werden, so wird bei Auslenkung des Bedienelementes in X-Richtung automatisch eine Kraft auf das Bedienelement für die Y-Richtung aufgeschaltet, so daß der Steuerknüppel bei Auslenkung in X-Richtung automatisch um einen proportional zur Auslenkung in der X-Richtung gewählten Betrag in Y-Richtung ohne Zutun des Bedieners verschoben wird. Diese Technik läßt sich besonders vorteilhaft bei unterschiedlichsten Meßaufgaben im Koordinatenmeßgerät einsetzen.

Beispielsweise werden optische Tastköpfe in Koordinatenmeßgeräten an einer sogenannten Dreh-Schwenkeinheit befestigt. Die Dreh-Schwenkeinheit kann den optischen Tastkopf dann beliebig im Raum ausrichten. Üblicherweise befindet sich jedoch bei einer manuellen Bedienung des Koordinatenmeßgerätes die Werkstückoberfläche des abzutastenden Werkstückes nicht im Meßbereich des Taststrahles, so daß der Tastkopf entlang dem möglicherweise raumschräg ausgerichteten Taststrahl auf die Werkstückoberfläche zu oder von der Werkstückoberfläche weg bewegt werden muß. Gemäß dieser Weiterbildung ist es deshalb besonders vorteilhaft, die Vorzugsrichtung so zu wählen, daß der Tastkopf entlang dem Taststrahl des optischen Tastkopfes bewegt wird.

Eine zweite Einsatzmöglichkeit bei der mit einer Vorzugsrichtung gearbeitet werden sollte, um eine von den Koordinatenrichtungen des Maschinenkoordinatensystems abweichende Verfahrrichtung der Tasteinheit zu ermöglichen, kann sich dann ergeben, wenn das Werkstück-Koordinatensystem gegenüber dem Maschinen-Koordinatensystem gedreht ist. So können Koordinatenmeßgeräte üblicherweise nur in den Koordinatenrichtungen (X, Y, Z) also dem Maschinenkoordinatensystem verfahren werden. Oftmals kann es jedoch erforderlich sein, den Taster nicht exakt parallel zu den Koordinatenrichtungen zu verfahren, sondern jeweils in einer anderen Richtung. Man stelle sich beispielsweise einen Würfel vor, der über eine seiner Seitenkanten um 30° gekippt ist und man möchte bei Bedienung der Bedienelemente mit der Tasteinheit exakt parallel zu den Seitenflächen des Würfels verfahren können. Für diesen Fall ist es dann besonders vorteilhaft, die Vorzugsrichtungen derart einzustellen, daß bei Bedienung der Bedienelemente in der entsprechenden Richtung entsprechend dem gekippten Werkstück-Koordinatensystem die Tasteinheit verfährt. Die Vorzugsrichtung wird dann so gewählt, daß die Abtasteinheit entlang der Achsen eines gegenüber den durch die Mechanik vorgegebenen Koordinatenrichtungen gedrehten Koordinatensystems, dem Werkstückkoordinatensystem, verfahren werden kann.

Eine andere Variante, bei der eine Vorzugsrichtung vorgegeben wird besteht in der Benutzerführung des Benutzers während des Antastens. So gibt es eine Reihe unterschiedlicher Situationen, in denen es für den Benutzer von großem Vorteil ist, wenn er vom Koordinatenmeßgerät im angetasteten Zustand aktiv unterstützt wird. Bei schaltenden Tastköpfen kann sich beispielsweise das Problem ergeben, daß der Bediener an schwer zugänglichen Stellen das Werkstück angetastet hat, der Taster deshalb aus seinen Lagerstellen ausgehoben ist und der Bediener nicht die korrekte Richtung ausmachen kann, um den Taster wieder von der Werkstückoberfläche abzuheben. Im schlimmsten Fall kann dies zu einem Abbrechen des Tasters führen, wenn sich der Taster beispielsweise in einer Bohrung befindet. Es ist deshalb besonders vorteilhaft für diesen Fall die Vorzugsrichtung derart zu wählen, daß bei Betätigung der Bedienelemente in der Vorzugsrichtung der Tastkopf auf seine letzte gültige Antastposition verfahren wird. Von dieser Position ist bekannt, daß der Taster zwar aus seinen Lagerstellen ausgehoben ist, daß der Taster allerdings nicht gefährdet ist abzubrechen. Man hat von hieraus also eine gute Ausgangsposition für einen erneuten Versuch den Taster von der Werkstückoberfläche zu entfernen. Mißlingt dieser Versuch wieder, so kann man zu dieser Ausgangsposition immer wieder über die aufgeschaltete Vorzugsrichtung zurückkehren. Die Vorzugsrichtung darf natürlich nur solange aufgeschaltet werden, solange die eine Antastung detektierenden Lagerstellen geöffnet sind und der Taster somit aus seiner Ruheposition ausgelenkt ist. Sobald der durch die Lagerstellen definierte Kontakt nämlich wieder geschlossen ist, besteht keine Notwendigkeit mehr, aktiv auf den Verfahrweg Einfluß zu nehmen, da sich der Taster dann freigefahren hat.

In einer anderen Weiterbildung mit Vorzugsrichtung bei der im Koordinatenmeßgerät ein messender Tastkopf eingesetzt wird, kann es zu folgender Situation kommen. Nach der Antastung des Tasters auf der Werkstückoberfläche schaltet das Koordinatenmeßgerät in einen Regelungsmechanismus um, der in Antastrichtung eine definierte Meßkraft auf die Werkstückoberfläche aufschaltet. Die Meßkraft wird hierbei entweder durch elektromagnetische Linearmotoren aufgeschaltet oder über Federkräfte, die über entsprechende Federn im Tastkopf der Auslenkung des Tasters gegenüber dem Tastkopf proportional erzeugt werden. Damit weist der Tastkopf also in Antastrichtung immer eine definierte Kraft auf die Werkstückoberfläche auf. Verfährt der Bediener nunmehr aber das Koordinatenmeßgerät senkrecht zur Werkstückoberfläche, so kann es passieren, daß sich der Taster beispielsweise an einer Kante oder an einer steilen Rampe festsetzt und nunmehr die Auslenkung des Tasters gegenüber dem Tastkopf und damit auch die parallel zur Werkstückoberfläche wirkenden Kräfte größer werden. Dies kann bei filigranen Tastern, deren Tastkugeldurchmesser beispielsweise kleiner als 1 mm sein kann, zur Zerstörung des Tasters führen. Um dies zu verhindern kann deshalb vorteilhaft die Vorzugsrichtung im angetasteten Zustand proportional zu den lotrecht auf die Antastrichtung wirkenden Meßkräften gewählt werden.

Gemäß einer dritten Variante der Erfindung kann es von Vorteil sein, dem Bediener des Koordinatenmeßgerätes meßaufgabenspezifische Informationen über das Bedienelement zu übermitteln.

Eine erste Ausbildung dieser dritten Ausführungsform könnte darin bestehen, daß für ein Koordinatenmeßgerät, bei dem ein schaltender Tastkopf mit einem Taster als Tasteinheit verwendet wird, durch Aufschalten der Kräfte auf die Bedienelemente ein sogenannter Druckpunkt als Anschlag erzeugt wird. Dieser Druckpunkt zeigt dem Bediener des Koordinatenmeßgerätes an, wann für den betreffenden Taster die optimale Antastgeschwindigkeit erreicht ist.

In einer anderen Ausführungsvariante, bei der als Tasteinheit wiederum ein messender Tastkopf verwendet wird, könnte auf das Bedienelement ein leichter Ausschlag in Richtung der Antastrichtung aufgeschaltet werden, die dem Benutzer zeigt, in welcher Richtung die Werkstückoberfläche angetastet wurde. Da sich das Koordinatenmeßgerät in der betreffenden Richtung ohnehin in einem Regelkreis befindet und damit der Ausschlag des Bedienelementes in der betreffenden Richtung ohne Wirkung bleibt, ist dieser betreffende Ausschlag auch nicht hinderlich.

In einer anderen Ausführungsvariante könnte sich an einem Bedienelement, an dem der Bediener das Koordinatenmeßgerät verfahren möchte, bei dem allerdings das Verfahren nicht möglich sein soll, durch ein leichtes Klopfen auf dem Steuerknüppel aufmerksam gemacht werden.

Weitere Vorteile und Weiterbildung der Erfindung ergeben sich aus der nachfolgenden Figurenbeschreibung.

Hierin zeigen
- Figur 1: ein Koordinatenmeßgerät vom Portaltyp das über Bedienelemente (11, 12) gesteuert werden kann;
- Figur 2: ein Bedienelement in Form eines Betätigungshebels zur Verwendung als Bedienelement (11) in den nachfolgenden Schaltungen;
- Figur 3: ein zum Bedienelement (11) gemäß Figur 2 alternatives Bedienelement (32) mit einem Handrad (47) zur Verwendung in den nachfolgenden Schaltungen;
- Figur 4: Prinzipschaubild einer Steuereinheit für ein Koordinatenmeßgerät, bei dem auf die Bedienelemente (11, 12) eine Kraft proportional zur Massenträgheitskraft der bewegten Mechanik aufgeschaltet wird;
- Figur 5: ein gegenüber Figur 3 abgewandeltes Bedienelement, das speziell zur Verwendung in einer Schaltung gemäß Figur 4 vorgesehen ist;
- Figur 6-9: unterschiedliche Schaltungen von Koordinatenmeßgeräten bei denen bei Bedienung des wenigstens einen Bedienelementes das eine Vorzugsrichtung eingestellt wird.

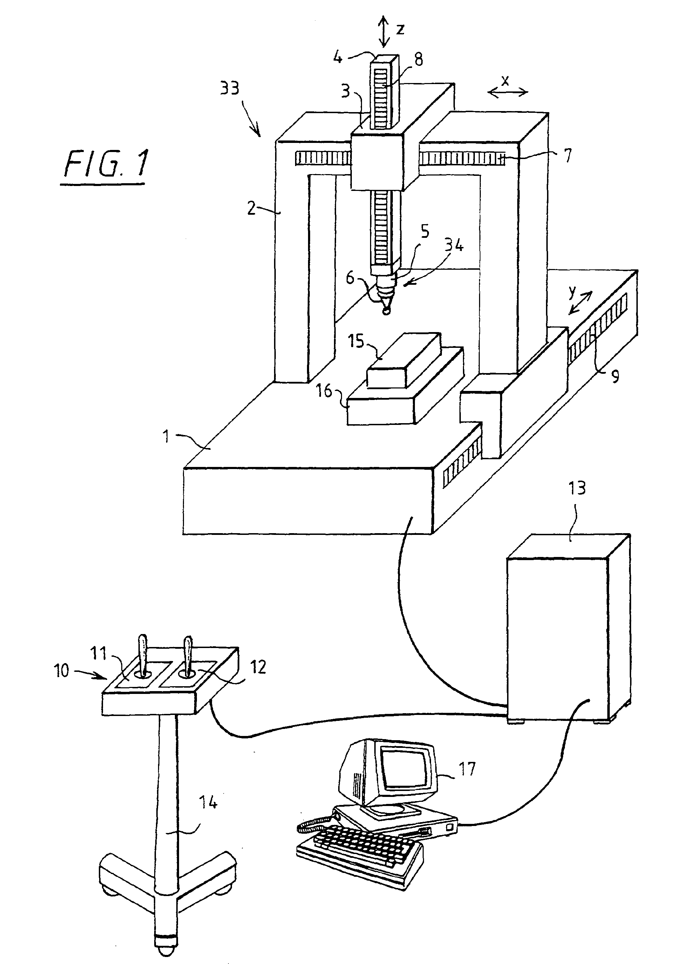

Figur 1 zeigt hierbei eine prinzipielle Darstellung eines erfindungsgemäßen Koordinatenmeßgerätes. Wie in Figur 1 zu sehen ist, ist hierzu ein zu vermessendes Werkstück (15) auf einer Palette (16) angeordnet, die wiederum auf einem Meßtisch (1) des Koordinatenmeßgerätes festgespannt ist. Zur Vermessung des Werkstückes (15) ist hierbei eine mit (34) bezeichnete Tasteinheit, die in dem hier gezeigten Beispiel aus einem Tastkopf (5) und einem Taster (6) besteht an einer Mechanik (33) beweglich geführt. Die Mechanik (33) umfaßt hierbei rein beispielhaft ein Portal (2), einen Querschlitten (3) und eine Pinole (4) . Das Portal (2) ist hierbei über entsprechende Führungen auf dem Meßtisch (1) beweglich in einer ersten Koordinatenrichtung entlang des Pfeiles (Y) über entsprechende, nicht näher gezeigte Lager beweglich gelagert und kann über einen entsprechenden Reibradantrieb, der sich auf dem Meßtisch (1) abstützt, in Richtung des Pfeiles (Y) bewegt werden. Zur Messung der genauen Maschinenposition befindet sich im Portal (2) ein optischer Taster, der einen Inkrementalmaßstab (9) abtastet. In gleicher Weise ist der Querschlitten (3) beweglich auf dem den Meßtisch (1) überspannenden Teil des Portales (2) in einer zweiten mit (X) bezeichneten Koordinatenrichtung gelagert, wobei ein Reibradantrieb zur Bewegung in Richtung des Pfeiles (X) vorgesehen ist und ein optischer Taster die genaue Position des Inkrementalmaßstabes (7) in Richtung des Pfeiles (X) abtastet. Auch die Pinole (4) ist in Richtung des Pfeiles (Z) analog in der dritten Koordinatenrichtung beweglich gelagert, wobei ebenfalls entsprechende Antriebe die Pinole (4) in Richtung des Pfeiles (Z) antreiben können. Ein ebenfalls im Querschlitten angeordneter optischer Tastkopf tastet hierbei die genaue Position des Maßstabes (8) ab.

Ein derartig ausgestaltetes Koordinatenmeßgerät wird üblicherweise durch Daten gesteuert, wobei der Tastkopf (5) von der Mechanik (35) so verfahren wird, daß der Taster (6) des zu vermessenden Werkstückes an entsprechend durch die Daten vorgegebenen Punkten antastet. Alternativ kann die Steuerung der Antriebe der Mechanik (33) jedoch auch über die gezeigten Bedienelemente (11, 12), die hier beispielhaft auf einem Bedienpult (10) angeordnet sind, erfolgen. Das Bedienpult (10) kann über einen Wagen (14) im Bereich des Koordinatenmeßgerätes verfahren werden. Das Bedienpult (10) steht hierbei in Verbindung mit der Steuerung (13) die das Bindeglied zu den Antrieben und Sensoren des Koordinatenmeßgerätes darstellt. An die Steuerung (13) ist zusätzlich noch ein Auswerterechner (17) angeschlossen.

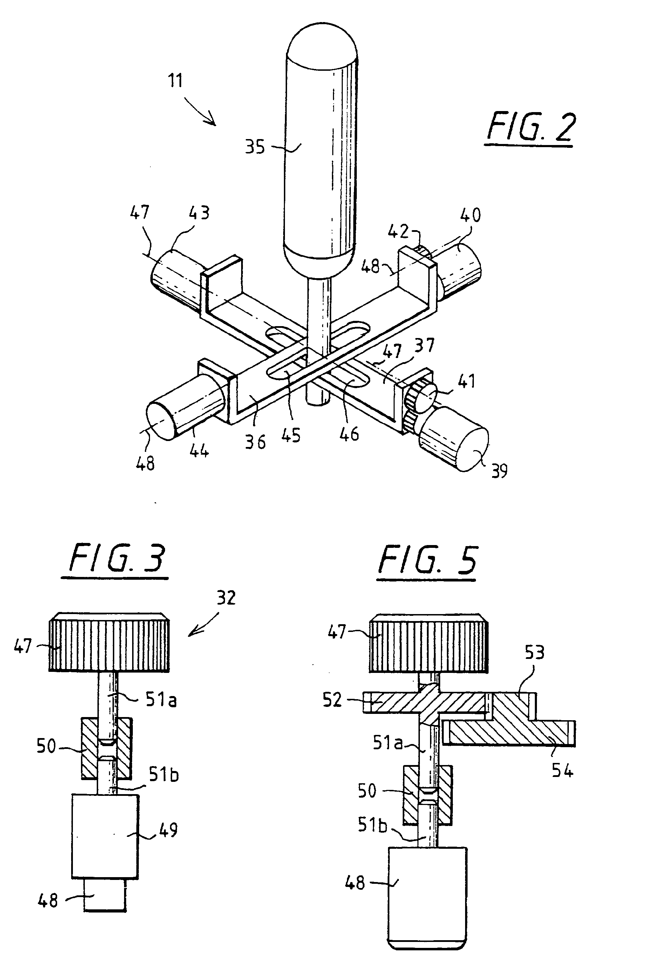

Wie bereits oben ausgeführt, sind die manuell betätigbaren Bedienelemente (11, 12), mit denen die Antriebe der Mechanik (33) gesteuert werden können, derart ausgestaltet, daß auf die Bedienelemente entsprechend spezifischen Gegebenheiten im Meßablauf durch eine Krafteinheit Kräfte aufgeschaltet werden können. Wie dies im einzelnen möglich ist, soll nunmehr näher anhand der Figuren 2 und 3 erläutert werden.

Figur 2 zeigt hierbei das Bedienelement (11) gemäß Figur 1. Das Bedienelement umfaßt hierbei einen Knüppel (35) dessen unteres Ende durch jeweils eine Nut (45) bzw. (46) von zwei drehbar gelagerten Elementen (36, 37) durchgeführt ist. Die drehbar gelagerten Elemente (36, 37) sind hierbei um die Drehachsen (47, 48) drehbeweglich aufgehängt. Das untere Ende des Steuerknüppels (35) ist hierbei ebenfalls beweglich aufgenommen, so daß bei einer Auslenkung des Steuerknüppels (35) aus seiner Ruhelage die Elemente (36, 37) um die Achsen (47, 48) gedreht werden, so daß die Drehgeber (43, 44) eine entsprechende Verdrehung der Elemente (36 bzw. 37) detektieren und ein entsprechendes Signal an die Steuerung des Koordinatenmeßgerätes abgeben. Die Drehgeber (43, 44) sind hierbei als elektrische Potentiometer ausgeführt, können jedoch auch anders ausgebildet sein, z.B. als optisch arbeitende Drehwinkelmesser. Der Steuerknüppel (35) wird zusätzlich über hier nicht näher gezeigte Federn immer in die in Figur 2 gezeigte Ruheposition gezogen. Um auf den Steuerknüppel nun zusätzlich entsprechende Kräfte aufschalten zu können, sind weiterhin an den anderen Enden der Elemente (36, 37) im Bereich der Drehachsen (47, 48) Zahnräder (41, 42) montiert, in die die besagten Krafteinheiten in Form von Elektromotoren (39, 40) mittels hieran angebrachter Zahnräder eingreifen. Auf die Elektromotoren (39, 40) wird hierbei von einem weiter unten noch näher zu beschreibenden Funktionsbaugruppe, die hier beispielhaft als Controller (22) ausgeführt ist eine Spannung appliziert, so daß das entsprechende Drehmoment der Elektromotoren (39, 40) über die Zahnräder (41, 42) und die Elemente (36, 37) auf den Steuerknüppel (35) übertragen wird.

Figur 3 zeigt rein beispielhaft ein alternatives Bedienelement (32) wie es ebenfalls oftmals zur Bedienung von Koordinatenmeßgeräten verwendet wird. Das Bedienelement weist ein zur manuellen Betätigung vorgesehenes Handrad (47) auf, welches über eine Welle (51a, 51b) mit einem Elektromotor (49) als Krafteinheit und einem Drehgeber (48) verbunden ist. Um ein Überdrehen in der Endanschlagstellung und damit eine Zerstörung des Drehgebers (48) zu verhindern, weist das Bedienelement (32) zusätzlich eine Rutschkupplung (50) auf, die die beiden Wellenhälften (51a, 51b) über einen Ring miteinander verbindet, wobei der Ring sowohl mit dem Ende der Wellenhälfte (51a) wie auch mit dem Ende der Wellenhälfte (51b) reibschlüssig verbunden ist.

Vollkommen analog zu dem in Figur 3 gezeigten Bedienelement wird hierbei über den Drehgeber (48) die aktuelle Stellung des Handrades (47) ausgelesen, während über den Elektromotor (49) auf das Bedienelement entsprechend den spezifischen Gegebenheiten im Meßablauf entsprechend eine Kraft aufgeschaltet werden kann.

Das Bedienelement gemäß Figur 3 unterscheidet sich neben der Tatsache, daß als Eingabemedium ein drehbares Handrad (47) verwendet wird insbesondere durch die Tatsache, daß es sich im Gegensatz zum Bedienelement gemäß Figur 2 um ein Bedienelement handelt, bei dem die Mechanik (33) des Koordinatenmeßgerätes in der entsprechenden Koordinatenrichtung proportional zur Drehstellung des Handrades verfahren wird. Im Gegensatz hierzu gibt das Bedienelement gemäß Figur 2 entsprechend der Auslenkung des Steuerknüppels (35) eine Geschwindigkeit in der entsprechenden Koordinatenrichtung vor.

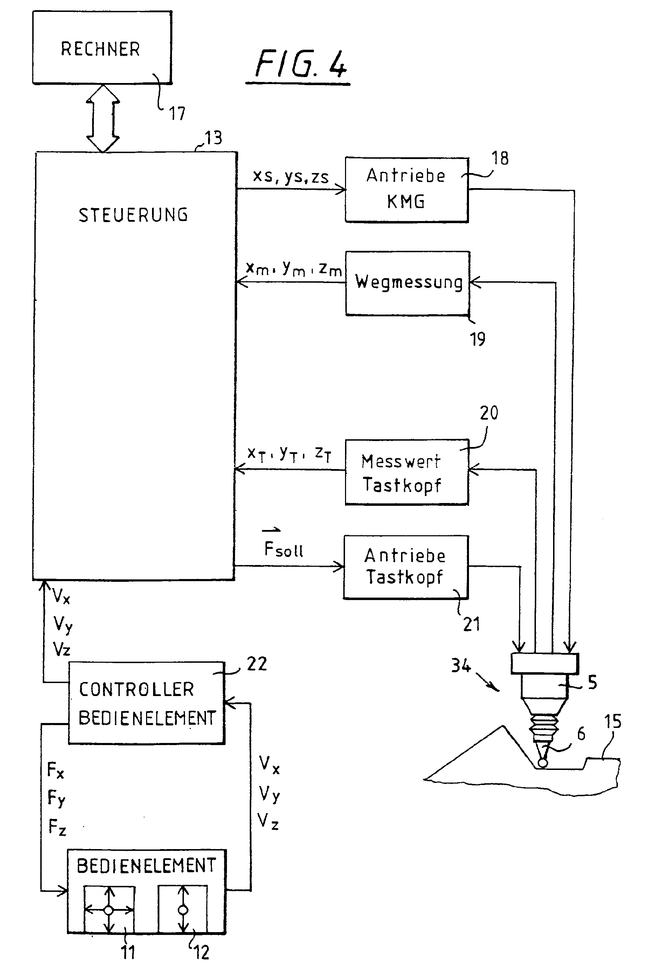

Anhand von Figur 4 soll nunmehr ein erstes Ausführungsbeispiel der Steuerungsschaltung für ein erfindungsgemäßes Koordinatenmeßgerät angegeben werden. Wie bereits im Zusammenhang mit Figur 1 ausgeführt, muß zur Antastung eines Werkstückes (15) die Tasteinheit (34) entsprechend in den Koordinatenrichtungen (X, Y, Z) so verfahren werden, daß der Taster (6) die Oberfläche des Werkstückes (15) antastet. Dazu wird von den Bedienelementen (11, 12) entsprechend der Auslenkung aus der Nullage in der betreffenden Koordinatenrichtung ein Signal, das hier mit (Vx, Vy, Vz) bezeichnet ist, an einen elektronischen Controller (22) des Bedienelementes gegeben. Der Controller (22), der hierbei als elektronische Schnittstelle zwischen den Bedienelementen (11, 12) sowie der Steuerung (13) des Koordinatenmeßgerätes dient, nimmt hierbei die von den Drehgebern der Bedienelemente gelieferten Signale (Vx, Vy, Vz) auf und wandelt diese in entsprechende Signale um, die hierbei der Einfachheit halber ebenfalls mit (Vx, Vy, Vz) bezeichnet wurden. Diese umgewandelten Signale (Vx, Vy, Vz) werden an die Steuerung (13) weitergegeben. Es soll an dieser Stelle darauf aufmerksam gemacht werden, daß in den gezeigten Zeichnungen die Steuerung (13) nur über schematisch gezeigte Leitungen mit dem Controller (22) verbunden ist. Natürlich wird die Anbindung des Controllers (22) an die Steuerung über logische Datenkanäle, z.B. eine LAN-Anbindung oder eine Schnittstelle RS232 realisiert. Aufgrund der Signale (Vx, Vy, Vz) leitet die Steuerung entsprechende Signale (Xs, Ys, Zs) ab, auf deren Basis dann die Antriebe (18) der Mechanik angesteuert werden und die Mechanik (33) des Koordinatenmeßgerätes in den Koordinatenrichtungen entsprechend verfahren wird. Die aktuelle Position der Tasteinheit (34), die sogenannte Maschinenposition (Xm, Ym, Zm), wird hierbei, wie ebenfalls bereits oben beschrieben, über optische Tastköpfe ermittelt, die die entsprechenden Maßstäbe (7, 8, 9) in den drei Koordinatenrichtungen abtasten. Diese Meßeinrichtungen werden hierbei pauschal mit dem Bezugszeichen (19) als Wegmeßeinrichtung bezeichnet.

Zusätzlich ist in dem hier gezeigten Beispiel die Tasteinheit (34) rein beispielhaft als messender Tastkopf (5) ausgeführt, bei dem der Taster (6) kontinuierlich gegenüber dem Tastkopf (5) in allen drei Koordinatenrichtungen ausgelenkt werden kann. Die Auslenkung des Tasters (6) gegenüber dem Tastkopf (5) wird hierbei durch Meßwerterfassungseinrichtungen (20) erfaßt, die die Auslenkung des Tasters (6) in jede der drei Koordinatenrichtungen erfassen. Die betreffende gemessene Auslenkung in den drei Koordinatenrichtungen wird hierbei mit (XT, YT, ZT) als Tasterauslenkung bezeichnet. Zusätzlich weist der Tastkopf auch sogenannte Meßkraftgeneratoren (21) auf, die in jede der drei Koordinatenrichtungen eine definierte Meßkraft auf den Taster (6) entsprechend einer Vorgabe (F̅ₛₒₗₗ) aufschalten können.

Die Besonderheit des bislang in Figur 4 gezeigten Koordinatenmeßgerätes ist hierbei darin zu sehen, daß bisher bekannte Bedienelemente vollkommen unabhängig von dem bei der Beschleunigung der einzelenen Teile der Mechanik (33) auftretenden Massenträgheitskräften funktionierten. Nimmt der Bediener deshalb schnelle Änderungen der Bedienelemente (11, 12) zum Verfahren der Tasteinheit (34) vor, so kann dies zur Folge haben, daß hierdurch in Folge der hieraus resultierenden hohen Beschleunigungen es zu Deformationen oder sogar zur Zerstörung der Mechanik (33) kommen kann. Um diesem Problem abzuhelfen wird deshalb in der Schaltung gemäß Figur 4 die Kraft, mit der die Bedienelemente (11, 12) beaufschlagt werden, näherungsweise proportional der bei der Beschleunigung der Mechanik (33) auftretenden Massenträgheitskraft gewählt. Dies soll rein beispielhaft anhand von Figur 1 im Zusammenhang mit einer Verstellung des Portals 2 in der Koordinatenrichtung gemäß Pfeil (Y) gezeigt werden. Zur Verstellung des Portals (2) muß der Bediener das Bedienelement (11) in der entsprechenden Richtung bewegen. Bei einer Auslenkung des Bedienelementes (11) aus der Ruhelage wird jedoch das Portal zunächst solange beschleunigt bis es die gewünschte Geschwindigkeit erreicht hat. Auch beim Abbremsen des Portals, bis es an seiner endgültigen gewünschten Position zum Stillstand kommt, bedeutet eine Beschleunigung des Portals (2) und ruft selbstverständlich Massenträgheitskräfte hervor. Um nun zu verhindern, daß der Benutzer hierbei die maximal zulässigen Massenträgheitskräfte nicht überschreitet, wird deshalb auf das betreffende Bedienelement (11) eine der Auslenkung des Bedienelementes entgegengesetzte Kraft (Fy) aufgeschaltet, die näherungsweise proportional der bei der Beschleunigung des Portals (2) bzw. der Mechanik (33) auftretenden Massenträgheitskraft gewählt wird. Hierdurch erhält der Benutzer ein Gefühl für die tatsächlich zu beschleunigende Mechanik, so daß hierdurch der Benutzer zu große Beschleunigungen vermeiden kann.

Die Beschleunigung, die die Mechanik aufgrund des Antriebes der Mechanik in der betreffenden Koordinatenrichtung erfährt wird in der Ausführungsform gemäß Figur 4 durch eine Simulation des Controllers erzeugt. Natürlich kann genau so gut die betreffende Beschleunigung auch aus den Antriebsdaten (Xs, Ys, Zs) abgeleitet werden oder aus einem Beschleunigungssensor, der vorzugsweise in der Nähe der Tasteinheit (34) in der Mechanik des Koordinatenmeßgerätes befestigt ist. Die Massenträgheitskraft wird dann durch Multiplikation der Beschleunigung mit der in der betreffenden Koordinatenrichtung beschleunigten Masse der Mechanik (33) errechnet, wobei dann proportional zu der Massenträgheitskraft ein Signal (Fx, Fy, Fz) auf das Bedienelement (11, 12) aufgeschaltet wird, wodurch das betreffende Bedienelement (11, 12) eine entgegengesetzte durch den Bediener spürbare Kraft erzeugt. Die Masse entspricht in dem gezeigten Beispiel bei einem Verfahren in Richtung des Pfeiles (Y) der Masse des Portals (2) mit allen hieran befestigen Komponenten, wie Antriebe, Querschlitten, Pinole, Tasteinheit etc..

Das Ausführungsbeispiel gemäß Figur 4 wurde hier rein beispielhaft für ein Bedienelement gemäß Figur 2 gezeigt. Selbstverständlich kann jedoch auch das Bedienelement (32) gemäß Figur 3 Einsatz finden.Auch hierbei wird dem Bedienelement über den Elektromotor (49) ein proportional der bei der Beschleunigung der Mechanik (33) auftretenden Massenträgheitskraft ein Gegendrehmoment aufgeschaltet.

Figur 5 zeigt hierbei zusätzlich ein sehr einfaches Bedienelement, bei dem die auf das Bedienelement aufzuschaltende Kraft sogar ohne den unten bezeichneten Motor aufgeschaltet werden kann. Hierbei ist das Bedienelement nämlich lediglich mit einer zu beschleunigenden Masse (54) gekoppelt die bei der Betätigung des Bedienelements ebenfalls beschleunigt werden muß. Das Bedienelement ist hierbei im wesentlichen genau so aufgebaut wie das Bedienelement gemäß Figur 3; im Unterschied zum Elektromotor (49) ist jedoch das Bedienelement mit einer rotierbaren Schwungscheibe (54) verbunden, die bei Betätigung des Handrades (47) beschleunigt werden muß. Dazu ist die Masse (54) über ein die Zahnräder (52, 53) umfassendes Getriebe verbunden, so daß die Drehfrequenz des Handrades (47) in eine erheblich höhere Drehfrequenz der zu beschleunigten Masse (54) übersetzt wird. Die gezeigte Anordnung weist hierbei den besonderen Vorteil auf, daß die zu beschleunigende Masse (54) variabel gegen andere entsprechende Massen ausgetauscht werden kann, so daß das Handrad nach einer elektronischen Umschaltung selbstverständlich auch für verschiedene Koordinatenrichtungen der Mechanik (33) des Koordinatenmeßgerätes verwendet werden kann. Wird das Handrad beispielsweise zum verstellen der Pinole (4) in Richtung des Pfeiles (Z) verwendet, so wird man eine Scheibe (54) mit erheblich niedrigerer Masse verwenden, als für den Fall, wenn das Bedienelement zum Verfahren des gesamten Portals (2) für die Koordinatenrichtung (Y) verwendet wird.

Typische Massenträgheitsmomente, die durch die Scheibe (54) in verbindung mit dem Getriebe auf das Handrad (47) aufgeschaltet werden, könnten hierbei einen Wert von typischerweise größer 1 · 10⁻³ kg m² betragen.

Natürlich muß das Bedienelement nicht wie in Figur 5 gezeigt ausgeführt sein, sondern beispielsweise könnte anstelle einer drehbaren Scheibe (54) und des Zahnrades (53) auch eine Zahnstange mit einer hieran befestigten Masse vorgesehen sein, so daß das Zahnrad (52) die rotierende Bewegung in eine lineare Bewegung einer zu beschleunigenden Masse umsetzt. Natürlich kann auch die Scheibe (54) unmittelbar an einer der Wellenhälften (51a, 51b) befestigt werden, so daß auf das zusätzliche Getriebe (52, 53) und auf ein Drehlager für die Drehscheibe (54) verzichtet werden kann. Ein derartiges Bedienelement weist jedoch den Nachteil auf, daß es relativ unflexibel ist und speziell für eine Bewegungsrichtung eines speziellen Koordinatenmeßgerätes gefertigt werden muß.

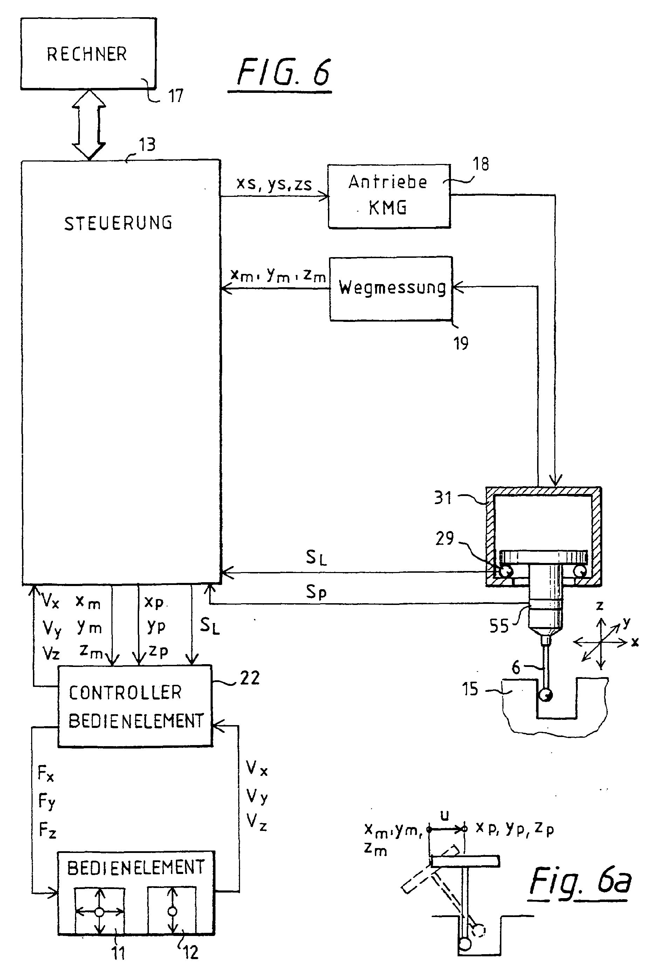

Im Zusammenhang mit den Figuren 6 bis 9 soll nunmehr eine grundsätzlich zweite Ausführungsvariante besprochen werden, bei der auf ein Bedienelement entsprechend spezifischen Gegebenheiten im Meßablauf entsprechend Kräfte so aufgeschaltet werden, daß sich bei der Bedienung der Bedienelemente wenigstens eine Vorzugsrichtung ergibt, in die die Bedienelemente vorzugsweise bedient werden können.

Im ersten Ausführungsbeispiel dieser zweiten grundsätzlichen Ausführungsvariante gemäß Figur 6 handelt es sich hierbei um ein Koordinatenmeßgerät, bei dem die Tasteinheit speziell als sogenannter schaltender Tastkopf (31) ausgeführt ist. Das gemeinsame Charakteristikum schaltender Tastköpfe ist hierbei darin zu sehen, daß bei der Antastung des Tasters (6) an einem Werkstück (15) der Taster (6) gegenüber dem Tastkopf (31) aus seinen Lagerstellen (29), in denen der Taster (6) am Tastkopf (31) gelagert ist, ausgehoben wird und hierdurch eine Unterbrechung eines elektrischen Kontaktes stattfindet. Durch die Unterbrechung des elektrischen Kontaktes wird hierbei ein Signal (SL) an die Steuerung (13) abgegeben, aufgrund deren eine Antastung des Werkstückes mit dem Taster (6) als gültig erkannt wird. In einer ersten Lösung werden mit dem Signal gleichzeitig entsprechende von den Wegmeßeinheiten (19) gemessenen Maschinenpositionen (Xm, Ym, Zm) als gültige Antastpositionen (Xp, Yp, Zp) übernommen.

In einer verfeinerten Lösung von schaltenden Tastköpfen wird zur Genauigkeitssteigerung zusätzlich im Taststift (6) ein Piezo-Kristall (55) vorgesehen, der bereits bei der geringsten Berührung des Tasters (6) mit dem Werkstück, also noch lange bevor der Taster (6) aus seinen Lagerstellen (29) ausgehoben wird, ein elektrisches Signal (SP) an die Steuerung (13) gibt, aufgrund dessen die Maschinenpositionen (Xm, Ym, Zm) eingefroren werden. Erst wenn der Taster (6) dann aus seinen Lagerstellen (29) aushebt, wird die Antastung als gültig gegeben und die eingefrorenen Maschinenpositionen als Antastpositionen (Xp, Yp, Zp) übernommen. Dieses Verfahren weist gegenüber dem erst beschriebenen Verfahren den zusätzlichen Vorteil auf, daß hierdurch erheblich genauere Antastpunkte erzielt werden können.

Die Besonderheit bei schaltenden Tastköpfen ist insbesondere darin zu sehen, daß mit diesen nicht genauer festgestellt werden kann, in welche Richtung der Taster (6) gegenüber dem Tastkopf (31) ausgelenkt ist. Hat der Bediener des Koordinatenmeßgerätes nunmehr mit dem besagten Taster (6) eine schwer zugängliche Stelle zu vermessen, wie beispielsweise eine raumschräge Bohrung, so kann es für ihn oftmals sehr problematisch sein, den Taster wieder heil aus der besagten Bohrung herauszukriegen ohne ihn abzubrechen. Figur 6a veranschaulicht dies. Wird der Tastkopf (31) von der letzten gültigen Antastposition (Xp, Yp, Zp) weiter nach links auf die Maschinenposition (Xm, Ym, Zm) bewegt, so nimmt die Auslenkung des Tasters (6) immer weiter zu, bis dieser möglicherweise zerstört wird. Gemäß der Ausbildung der Figur 6 wird deshalb vorgeschlagen, die auf die Bedienelemente wirkende Kraft derart einzustellen, daß die sich hierdurch ergebende Vorzugsrichtung immer in Richtung auf die Position des Tastkopfes in seiner letzten gültigen Antastposition weist. Und zwar natürlich solange, bis der schaltende Kontakt wieder geschlossen ist und der Taster damit nicht mehr aus seiner Ruheposition ausgelenkt ist. Hierdurch kann der Benutzer intuitiv über die Bedienelemente so geführt werden, daß er den Tastkopf immer wieder in diejenige Stellung zurückverfahren kann, in der sich der Schaltkontakt des schaltenden Tastkopfes geöffnet hat. Damit kann er über dieses Aufschalten der Vorzugsrichtung immer wieder zu dieser definierten Position zurückgeführt werden, indem er sicher gehen kann, daß der Taststift nicht abbricht. Die besagte Vorzugsrichtung wird natürlich nur solange aufgeschaltet, bis der Taster (6) wieder in seinen Lagerstellen (29) ordnungsgemäß liegt und somit der während der Antastung geöffnete Schaltkontakt wieder geschlossen ist, denn nun besteht keine Gefahr mehr, daß der Taster abbricht.

Um diese Vorgehensweise in der Steuerung des Koordinatenmeßgerätes zu realisieren wird deshalb wie folgt vorgegangen:

Wie bereits oben erwähnt, wird beim Ausheben des Tasters (6) aus den Lagerstellen (29) ein Signal (SL) an die Steuerung (13) übermittelt, zu dem die je nach Methode verwendeten Maschinenpositionen (Xm, Ym, Zm) als aktuelle Antastpositionen (Xp, Yp, Zp) gespeichert werden. Diese aktuellen Antastpositionen (Xp, Yp, Zp) werden hierbei in der Steuerung (13) abgespeichert und gleichfalls über eine entsprechende Leitung auch an den Controller (22) übermittelt. Außerdem wird gleichfalls von der Steuerung (13) auch an den Controller (22) das Signal (SL), das das Öffnen des Schaltkontaktes wiedergibt, weiter übermittelt. Außerdem werden gleichfalls auch die aktuellen Maschinenpositionen (Xm, Ym, Zm) über eine entsprechende Leitung an den Controller (22) übermittelt. Liegt nun das besagte Signal (SL) an dem Controller (22) an, d.h. der Taster (6) ist aus den Lagerstellen (29) des Tastkopfes (31) ausgehoben, so wird aus den aktuellen Maschinenpositionen (Xm, Ym, Zm) und der letzten gültigen Antastposition (Xp, Yp, Zp) ein Vektor (U̅) aufgespannt (siehe Figur 6a), der letztlich nichts anderes als die Abweichung des Tastkopfes (31) von der letzten gültigen Antastposition (Xp, Yp, Zp) wiedergibt. Entsprechend der Richtung und der Länge dieses Vektors (U) wird auf die Bedienelemente, wie bereits oben ausgeführt, eine der Auslenkung entgegengesetzte Kraft aufgeschaltet, so daß die Bedienelemente entgegengesetzt dieser Richtung eine Kraft auf den Bediener ausüben. Hierdurch kann der Bediener immer wieder zurück zur letzten gemessenen Antastposition (Xp, Yp, Zp) gelangen, bis der Taster (6) wieder in den Lagerstellen (29) zum liegen kommt und damit das Signal (SL) wieder seine NullStellung enthält.

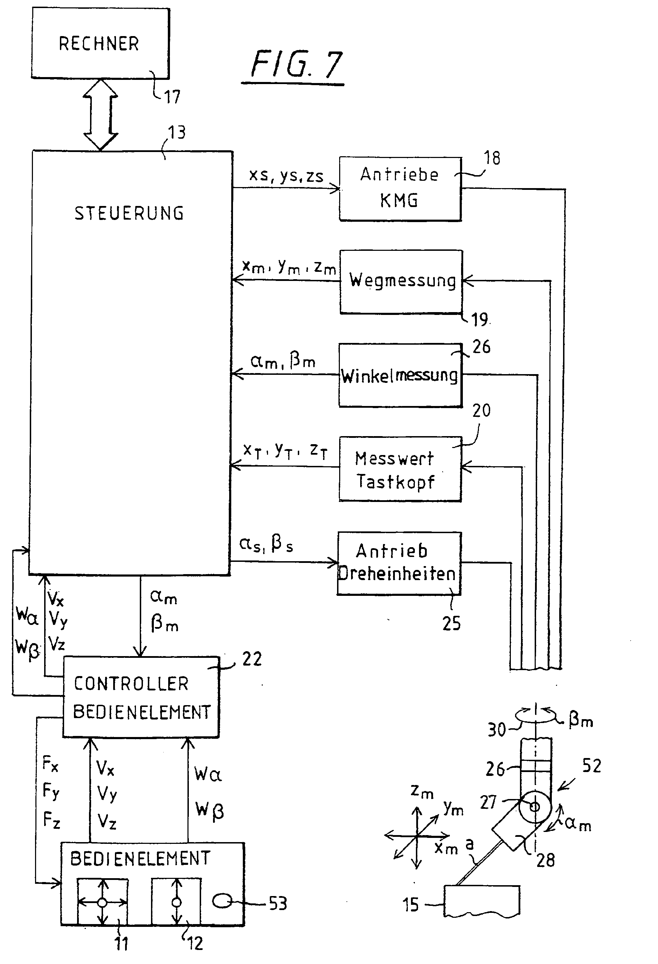

Figur 7 zeigt ein anderes Ausführungsbeispiel bei dem sich bei Bedienung des wenigstens einen Bedienelementes eine Vorzugsrichtung ergibt. Bei dem hier gezeigten Steuermechanismus wird ein optischer Taster (28) genutzt, der wie bei Koordinatenmeßgeräten üblich, an einer sogenannten Dreh- Schwenkeinheit (52) befestigt ist, so daß der Abtaststrahl (a) beliebig im Raum ausgerichtet werden kann. Dazu weist die Dreh- Schwenkeinheit (52) eine Dreheinheit (26) auf, mit der der optische Tastkopf (28) um eine erste Achse gemäß Pfeil (αm) gedreht werden kann, sowie eine zweite Dreheinheit (27) auf, mit der der optische Tastkopf (28) um eine zu der ersten Drehachse senkrechte zweite Drehachse entlang einem Pfeil (βm) ebenfalls verdreht werden kann, so daß der Tastkopf (28) beliebig im Raum ausgerichtet werden kann. Derartige optische Tastköpfe tasten üblicherweise die Oberfläche des zu vermessenden Werkstückes (15) mit einem Abtaststrahl (a) ab, wobei im manuellen Betrieb es in der Praxis sehr schwer ist, den optischen Tastkopf derart über der Oberfläche des zu vermessenden Werkstückes zu positionieren, daß die Werkstückoberfläche sich genau im Meßbereich des Abtaststrahls (a) befindet. Es ist deshalb wünschenswert den Tastkopf entweder näher an die Werkstückoberfläche heran zu bewegen oder von der Werkstückoberfläche weg zu bewegen. Weist die Dreh- Schwenkeinheit (52) jedoch eine beliebige raumschräge Ausrichtung auf, so wird es für den Bediener des Koordinatenmeßgerätes beliebig schwierig die Antriebe (18) des Koordinatenmeßgerätes so zu betätigen, daß der optische Tastkopf (28) genau in der Ausrichtung des Abtaststrahls (A) verfahren wird. Deshalb wird in der gezeigten Ausführungsform gemäß Figur 7 auf die Bedienelemente derart eine Kraft aufgeschaltet, daß die Vorzugsrichtung, die sich bei Betätigung der Bedienelemente in der Vorzugsrichtung ergibt, so gewählt ist, daß sich der optische Tastkopf entlang dem Taststrahl (a) bewegt. Hierzu wird aus der Winkelmeßeinrichtung (26), die die Drehstellungen (αm, βm) der Drehgelenke (26, 27) der Dreh-Schwenkeinheit (52) messen, über die Steuerung (13) auch an den Controller (22) weitergegeben. Im Controller (22) wird aus den besagten beiden Drehwinkeln (αm, βm) die genaue Ausrichtung des Abtaststrahls (a) abgeleitet und somit auf die Bedienelemente (11, 12) entsprechende Kräfte (Fx, Fy, Fz) aufgeschaltet, so daß sich bei Betätigung der Bedienelemente (11, 12) automatisch eine ggf. von den Koordinatenrichtungen abweichende Vorzugsrichtung entlang dem Taststrahl (a) ergibt, entlang derer die Tasteinheit verfahren wird.

Eine Besonderheit ist hinsichtlich der Bedienelemente (11, 12) noch zu erwähnen. So befindet sich auf dem Bedienpanel, auf dem auch die Bedienelemente (11, 12) angebracht sind zusätzlich eine Taste (53), mit der die Ansteuerung im Koordinatenmeßgerät von den Antrieben (18) auf die Antriebe (25) der Dreheinheiten (26, 27) der Dreh-Schwenkeinheit umgeschaltet werden kann. Im gedrückten Zustand dieser Taste kann deshalb mit dem Bedienelement (11) sowohl die Dreheinheit (26) wie auch die Dreheinheit (27) in analoger Weise wie die Antriebe (18) bedient werden, was den Winkelgeschwindigkeiten (Wα) und (Wβ) entspricht. Die Signale (Wα) und (Wβ) werden dann in Signale (αs) und (βs) gewandelt gemäß derer die Antriebe (25) der Dreheinheiten verstellt werden.

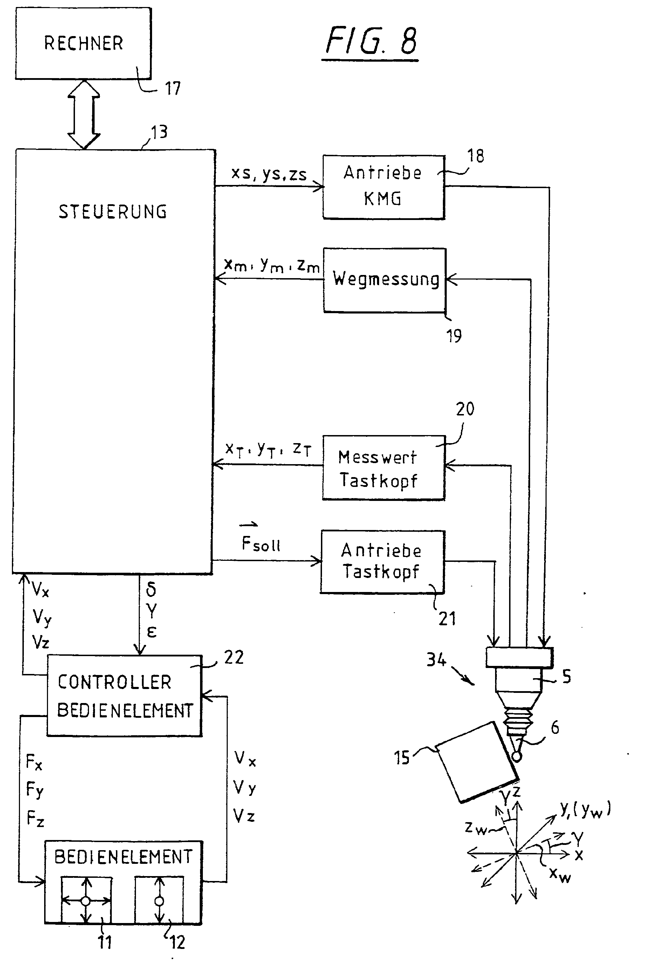

In Figur 8 ist nunmehr eine dritte Weiterbildung der besagten zweiten Ausführungsform gezeigt, in der sich bei Bedienung des wenigstens einen Bedienelementes eine vorzugsweise von den Koordinatenrichtungen abweichende Vorzugsrichtung ergibt entlang derer die Tasteinheit verfahren wird.

Hierzu ist zunächst anzumerken, daß die betreffende Prinzipschaltung die Tasteinheit (34) als messender Tastkopf (5) mit zugehörigem Taster (6) dargestellt ist. Anstelle dessen können natürlich auch beliebige andere Tastköpfe, wie beispielsweise optische Tastköpfe, schaltende Tastköpfe etc. verwendet werden. Die für den messenden Tastkopf beschriebene Funktionsbaugruppen (18-21) wurden bereits im Zusammenhang mit der Figur 4 beschrieben, so daß auf nochmalige Beschreibung verzichtet werden soll. Der Einsatz eines Koordinatenmeßgerätes an einfachen Werkstücken, wie einem Würfel, dessen Seitenflächen immer parallel zu den Koordinatenrichtungen ausgerichtet sind, ist denkbar einfach, da der Taster zunächst nur im Bereich der betreffenden Fläche positioniert werden muß und dann durch Betätigen des entsprechenden Bedienelementes (11, 12) einfach nur senkrecht auf die betreffende Oberfläche aufgebracht wird.

Erheblich komplizierter wird es jedoch dann, wenn Werkstücke oder Formelemente von Werkstücken vermessen werden müssen, die nicht mehr parallel zu den Koordinatenrichtungen ausgerichtet sind. Ein einfaches, veranschaulichendes Beispiel könnte sein, daß beispielsweise der oben bereits benannte Würfel einfach um 30° über eine seiner Kanten gekippt ist, wie dies beispielhaft bei dem Werkstück (15) in Figur 8 dargestellt wurde, so daß das Werkstückkoordinatensystem (Xw, Yw, Zw) gegenüber dem Maschinenkoordinatensystem (X, Y, Z) um die Y-Achse um einen Winkel Gamma von 30° verdreht ist. Für einen solchen gekippten Würfel wäre es nun gleichfalls wünschenswert, mit dem Taster (6) nach wie vor parallel zu den Würfeloberflächen verfahren zu können. Dazu wird auf die Bedienelemente (11, 12) deshalb in analoger Weise eine Kraft (Fx, Fy, Fz) aufgeschaltet, die den Bedienelementen ebenfalls mehrere von den Koordinatenrichtungen abweichende Vorzugsrichtungen aufschaltet, die so gewählt ist, daß die Abtasteinheit entlang der Achsen eines gegenüber den durch die Mechanik (33) vorgegebenen Koordinatenrichtungen gedrehten Koordinatensystems verfahren werden kann. Wie dies realisiert wird, soll nunmehr detaillierter anhand von Figur 8 beschrieben werden. Zunächst einmal wird das Koordinatenmeßgerät über ein hier nicht näher gezeigten Schalter in einen Modus umgeschaltet, in dem für das Werkstück (15) die entsprechenden gedrehten Werkstückkoordinatenrichtungen (Xw, Yw, Zw) aufgenommen werden. Dazu werden beispielsweise an dem Würfel drei jeweils senkrecht gegeneinander liegende Flächen des Würfels über jeweils drei Meßpunkte abgetastet und aus den abgetasteten Meßpunkten werden dann die drei Drehwinkel Delta (Drehwinkel des Werkstückkoordinatensystems (Xw, Yw, Zw) gegenüber dem Maschinenkoordinatensystem (X, Y, Z) um die Z-Achse), Gamma (Drehwinkel des Werkstückkoordinatensystems (Xw, Yw, Zw) gegenüber dem Maschinenkoordinatensystem (X, Y, Z) um die Y-Achse) und Epsilon (Drehwinkel des Werkstückkoordinatensystems (Xw, Yw, Zw) gegenüber dem Maschinenkoordinatensystem (X, Y, Z) um die X-Achse) berechnet und an den Controller (22) der Bedienelemente (11, 12) weitergegeben. Der Controller (22) berechnet aus den besagten Winkelwerten (Delta, Gamma, Epsilon) dann die entsprechend gedrehten Werkstückkoordinatenrichtungen (Xw, Yw, Zw) und gibt die auf die Bedienelemente aufgeschalteten Kräfte (Fx, Fy, Fz) danach demgemäß vor, so daß die Bedienelemente bei der Betätigung in einer Vorzugsrichtung verstellt werden, die den Werkstückkoordinatenrichtungen (Xw, Yw, Zw) entsprechen.

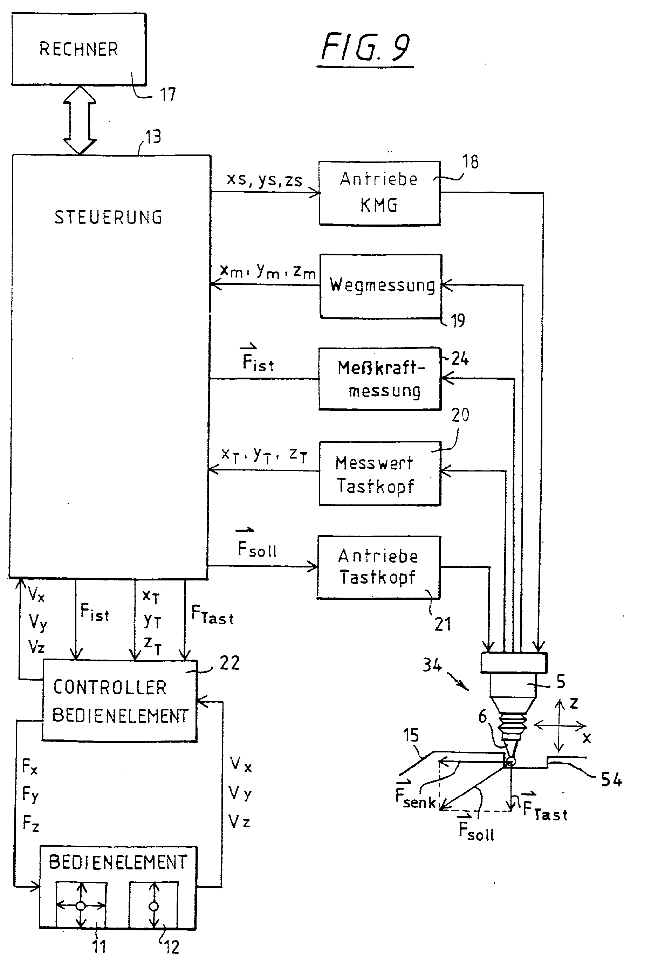

Anhand von Figur 9 soll nunmehr eine vierte Ausführungsform einer Koordinatenmeßgeräte-Steuerung beschrieben werden, bei der als Tasteinheit wieder ein messender Tastkopf (5) mit einem Taster (6) verwendet wird, wie dies bereits beispielhaft schon im Zusammenhang mit Figur 4 beschrieben wurde. Bei derart messenden Tastköpfen ist es hierbei üblich, wie bereits oben ausgeführt, daß der Taster (6) mit einer definierten Meßkraft beaufschlagt wird, die üblicherweise lotrecht auf die Oberfläche des zu vermessenden Werkstückes (15) im Antastpunkt zeigt. Diese Meßkraft wird entweder, wie dies im Zusammenhang mit den Figuren 4, 8 und 9 gezeigt ist, durch einen sogenannten Meßkraftgenerator erzeugt, was letztendlich nichts anderes als ein elektronischer Linearmotor ist, der in der betreffenden Koordinatenrichtung eine gewisse Kraft erzeugt oder aber mittels Federn, die bei der Auslenkung des Tasters (6) aus seiner Ruhelage gespannt werden und hier durch die Meßkraft erzeugen. Die lotrechte Richtung wird im CAD-Betrieb hierbei üblicherweise mit den abzutastenden Punkten auf der Werkstückoberfläche mitgeliefert und für jeden abzutastenden Punkt separat eingestellt. Dies ist im manuellen Betrieb bei dem der Taster mittels Bedienelementen (11, 12) verstellt wird, natürlich nicht möglich, da weder dem Koordinatenmeßgerät, noch dem Bediener für jedes Werkstück die genaue Ausrichtung der Oberfläche bekannt ist. Die Meßkraft wird hierbei deshalb üblicherweise in der Richtung aufgeschaltet, wie der Tastkopf (5) beim Aufsetzen des Tasters (6) auf der Oberfläche des zu vermessenden Werkstückes (15) verfahren wurde. Wurde, wie beispielsweise hier in Figur 9 dargestellt, der Tastkopf (5) zunächst vor dem Werkstück (15) positioniert und der Tastkopf dann mit dem Bedienelement (11) vertikal lotrecht auf die Werkstückoberfläche des Werkstückes (15) zubewegt, so wird die Meßkraft (F̅_{Tast}) ebenfalls horizontal auf das Werkstück zugerichtet auf den Taster (6) aufgeschaltet. Die vorgegebene Meßkraft (F̅_{Tast}) wird hierbei nunmehr, solange der Taster in Anlage mit dem Werkstück (15) ist, immer in Z-Richtung mit einem konstanten Betrag beaufschlagt. Dazu wird der Taster nach dem Berühren der Werkstückoberfläche in einen Regelkreis eingebunden, der aufgrund der durch die Meßwertaufnehmer (20) gemessenen Tasterauslenkung die Antriebe (18) entsprechend nachstellt, so daß sich der Taster immer in einer definierten Sollage befindet, wobei der Taster (6) in Antastrichtung immer besagte konstante Meßkraft aufgeschaltet wird, so daß der Taster auf das Werkstück gar nicht mehr weiter zubewegt werden kann. Lotrecht zu der Antastrichtung also in diesem Beispiel in den Koordinatenrichtungen (X, Y) ist jedoch ein Verfahren des Tastkopfes (5) noch möglich. Wird somit beispielsweise der Tastkopf (5) in Richtung des Pfeiles (X) verfahren, so wird der Taster (6) irgendwann einmal an der Kante (54) des Werkstückes hängen bleiben und sich eine Tasterauslenkung des Tasters (6) gegenüber dem messenden Meßkopf (5) in Richtung der Koordinatenrichtung (X) ergeben. Diese Auslenkung des Tasters (6) gegenüber dem Meßkopf (5) führt natürlich in senkrecht zur Antastrichtung stehender Richtung ebenfalls zu einer Meßkraft (F̅ₛₑₙₖ) die entweder wie in Figur 9 gezeigt durch die Meßkraftgeneratoren aufgebracht wird, um den Taster (6) in der Koordinatenrichtung (X) wieder in seine Nullage zurückzubewegen oder die für den Fall, daß die Meßkraft mittels Federn aufgebracht wird durch die Auslenkung des Tasters aus seiner Ruhelage entsteht. Für den Fall, daß es sich um einen sehr filigranen Taster handelt, dessen Tastkugel möglicherweise einen Durchmesser von weniger als 1 mm aufweist, besteht selbstverständlich die Gefahr, daß beim Überschreiten einer gewissen Meßkraft der Taster abbricht. Es ist deshalb sehr von Vorteil, wenn für diesen Fall auf die Bedienelemente (11, 12) eine Vorzugsrichtung aufgeschaltet würde, die so wirkt, daß die Auslenkung zwischen Taster (6) und messenden Tastkopf (5) beim Verfahren in der entsprechenden Richtung wieder geringer wird. Dies kann realisiert werden, indem die Vorzugsrichtung im angetasteten Zustand proportional zu den lotrecht auf die Antastrichtung wirkenden Meßkräften aufgeschaltet wird.

Wie dies realisiert wird soll nunmehr anhand von Figur 9 gezeigt werden. Über die Meßkraftgeneratoren läßt sich selbstverständlich anhand der eingestellten Ströme der Meßkrafteinheiten (24) die Meßkraft (F̅ᵢₛₜ) messen und wird an den Controller (22) weitergegeben. Darüberhinaus wird von der Steuerung (13) gleichfalls auch die in Antastrichtung wirkende Komponente (F̅ₜₐₛₜ) weitergegeben, so daß sich über die Vektorarithmetik die zur Antastrichtung senkrechte Kraftkomponente (F̅ₛₑₙₖ) (vgl. Figur 9b) ermitteln läßt. Diese Kraftkomponente (F̅ₛₑₙₖ) wird nun im Controller (22) dazu verwendet, um auf die Bedienelemente eine entsprechende Kraft (Fx, Fy, Fz) aufzuschalten, die den besagten Kraftkomponente (F̅ₛₑₙₖ) entgegenwirkt. Hierdurch wird der Benutzer durch die besagte eingestellte Vorzugsrichtung immer so geführt, daß er von der besagten Kante wieder entfernt wird.

Die weiteren Ausführungsbeispiele gemäß Ansprüchen 18-20 sind der Übersichtlichkeit halber nicht mehr durch Figuren unterlegt, da die betreffenden Steuerungsschaltungen im wesentlichen analog wie Figur 4 und Figur 6 aussehen.

Im Ausführungsbeispiel gemäß Anspruch 18 wird hierbei auf Bedienelemente, die im Meßablauf vom Benutzer nicht bedient werden sollen, ein Klopfen aufgeschaltet, so daß der Benutzer dies hierdurch mitgeteilt kriegt. Die Schaltung könnte, wie in Figur 4 zu sehen, aufgebaut sein, wobei zusätzlich zwischen der Steuerung (13) und dem Controller (22) eine zusätzlich Leitung vorhanden wäre, über die die Steuerung den Controller (22) die entsprechenden nicht zu benutzenden Bedienelemente mitteilt.

In einer anderen Ausführungsform gemäß Anspruch 19 könnte vom Controller (22) bei der Auslenkung der Bedienelemente (11, 12) durch Aufschalten einer Kraft (Fx, Fy, Fz) bei einer gewissen Auslenkung eine Art Anschlag bzw. ein Druckpunkt entstehen, der so vorgesehen wird, daß ein als Tasteinheit vorgesehener schaltender Tastkopf mit einer optimalen Antastgeschwindigkeit verfahren wird. Die Schaltung ergäbe sich ähnlich Figur 6, jedoch ohne die Leitungen (Xm, Ym, Zm), (Xp, Yp, Zp), (SL) zwischen der Steuerung (13) und dem Controller (22). Stattdessen würde eine Leitung zwischen Steuerung (13) und dem Controller vorgesehen, über die an den Controller die optimale Antastgeschwindigkeit übertragen wird.

Auch die Ausführungsform nach Anspruch 20, bei der die Kraft so vorgegeben wird, daß das Bedienelement solange der Taster das Werkstück antastet aus seiner Neutralschaltung in Antastrichtung ausgelenkt ist, kann einfach mittels einer leicht modifizierten Schaltung nach Figur 4 erzielt werden. Für diesen Fall muß zwischen Steuerung (13) und Controller (22) lediglich eine Leitung vorgesehen werden, die den Controller die Antastrichtung übermittelt.

Natürlich läßt sich analog bei Tastköpfen, bei denen die Meßkraft über Federn eingestellt wird, die Meßkraft (F̅ᵢₛₜ) analog durch die aktuelle Tasterauslenkung ermitteln und analog zu obigen Ausführungen verarbeiten.

Abschließend bleibt zu erwähnen, daß die Erfindung natürlich nicht auf die gezeigten Ausführungsbeispiele beschränkt ist, sondern selbstverständlich auch Abwandlungen miterfaßt sein sollen. Beispielsweise können unterschiedliche Ausführungsformen miteinander kombiniert werden.
Der genaue Umfang der Erfindung wird von den Ansprüchen definiert.

## Patentansprüche

1. Koordinatenmeßgerät mit wenigstens einer Tasteinheit (34) zum Abtasten eines zu vermessenden Werkstückes (15) mit
- einer Mechanik (33) über die die Tasteinheit in den drei Koordinatenrichtungen (X, Y, Z) bewegt werden kann
- mehreren Antrieben (18), über die die Mechanik zur Bewegung der Tasteinheit antreibbar ist
- einem manuell betätigbaren Bedienelement (11, 12), mit dem die Antriebe gesteuert werden können, wobei auf das Bedienelement spezifischen Gegebenheiten im Meßablauf entsprechend durch eine Krafteinheit eine Kraft aufschaltbar ist

2. Koordinatenmeßgerät nach Anspruch 1, wobei eine mit dem Bedienelement verbundene Funktionsbaugruppe (Controller 22) vorgesehen ist, die die Aufschaltung der Kraft auf das Bedienelement steuert.

3. Koordinatenmeßgerät nach Anspruch 1 oder 2, wobei die Kraft näherungsweise proportional zur Beschleunigung der Mechanik in der durch das Bedienelement gesteuerten Koordinatenrichtung ist.

4. Koordinatenmeßgerät nach Anspruch 3, wobei die Kraft näherungsweise proportional zu der bei der Beschleunigung der Mechanik auftretenden Massenträgheitskraft gewählt ist.

5. Koordinatenmeßgerät nach Ansprüchen 3 oder 4, wobei die Krafteinheit eine mit dem Bedienelement gekoppelte zu beschleunigenden Masse ist, die bei der Betätigung des Bedienelements beschleunigt wird.

6. Koordinatenmeßgerät nach Anspruch 5, wobei die Masse entweder eine rotierbare Scheibe oder ein linearbeweglich geführter Körper ist.

7. Koordinatenmeßgerät nach Anspruch 6, wobei die Masse mit dem Bedienelement über ein Getriebe verbunden ist.

8. Koordinatenmeßgerät nach Anspruch 6, wobei die Masse starr mit dem Bedienelement verbunden ist.

9. Koordinatenmeßgerät nach Anspruch 3 oder 4, wobei die Funktionsbaugruppe die aufgeschaltete Kraft entweder aus dem Signal wenigstens eines an der Mechanik befestigten Beschleunigungssensors, aus den Signalen für die Antriebe des Koordinatenmeßgerätes (18) oder aus dem Signal (Vx,Vy,Vz) des Bedienelementes selber ableitet.

10. Koordinatenmeßgerät nach Anspruch 2, wobei die Funktionsbaugruppe die Kraft so aufschaltet, daß sich bei Bedienung des Bedienelements wenigstens eine Vorzugsrichtung ergibt, in die das bzw. die Bedienelemente vorzugsweise betätigt werden können.

11. Koordinatenmeßgerät nach Aspruch 10, wobei die Funktionsbaugruppe bei einer Auslenkung wenigstens eines Bedienelementes entsprechend der Auslenkung die besagte Kraft so auf das bzw. die Bedienelemente aufschaltet, daß sich ein der Vorzugsrichtung entsprechendes konstantes Verhältnis zwischen den Auslenkungen des bzw. der Bedienelemente für die unterschiedlichen Koordinatenrichtungen ergibt.

12. Koordinatenmeßgerät nach Anspruch 10 oder 11, wobei die Tasteinheit ein optischer Tastkopf ist und die Vorzugsrichtung durch die Funktionsbaugruppe derart vorgegeben ist, daß bei Betätigung der Bedienelemente in Vorzugsrichtung die Tasteinheit entlang dem Taststrahl verfahren wird.

13. Koordinatenmeßgerät nach Anspruch 10 oder 11, wobei die Funktionsbaugruppe mehrere Vorzugsrichtungen vorgibt, die so gewählt sind, daß die Abtasteinheit bei der Betätigung der Bedienelemente in die Vorzugsrichtungen entlang den Achsen eines gegenüber den durch die Mechanik vorgegebenen Koordinatenrichtungen (X, Y, Z) gedrehten Koordinatensystems (Xw, Yw, Zw) verfahren werden kann.

14. Koordinatenmeßgerät nach Anspruch 10 oder 11, wobei die Tasteinheit ein schaltender Tastkopf mit einem gegenüber dem Tastkopf beweglichen Taster ist und die Vorzugsrichtung (U̅) durch die Funktionsbaugruppe derart vorgegeben wird, daß bei Betätigung der Bedienelemente in die Vorzugsrichtung der Tastkopf zur letzten gültigen Antastposition (Xp,Yp,Zp) verfahren wird.

15. Koordinatenmeßgerät nach Anspruch 14, wobei die Funktionsbaugruppe die Vorzugsrichtung solange aufschaltet, solange der Taster aus seiner Ruheposition ausgelenkt ist.

16. Koordinatenmeßgerät nach Anspruch 10 oder 11, wobei die Tasteinheit ein messender Tastkopf mit einem gegenüber dem Tastkopf auslenkbaren Taster ist, und wobei die Funktionsbaugruppe die Vorzugsrichtung entgegen der Richtung der lotrecht auf die Antastrichtung wirkenden Meßkräfte wählt.

17. Koordinatenmeßgerät nach Anspruch 10 oder 11, wobei die Tasteinheit ein messender Tastkopf mit einem gegenüber dem Tastkopf auslenkbaren Taster ist, und wobei die Vorzugsrichtung im angetasteten Zustand entgegen der auf den Tastkopf wirkenden Meßkraft aufgeschaltet ist.

18. Koordinatenmeßgerät nach Anspruch 2, wobei die Funktionsbaugruppe die Kraft derart aufschaltet, daß sich die Bedienung eines im Meßablauf vom Bediener nicht vorgesehenen Bedienelementes durch ein Klopfen bemerkbar macht.

19. Koordinatenmeßgerät nach Anspruch 2, wobei die Kraft von der Funktionsbaugruppe derart vorgegeben wird, daß bei der Auslenkung des Bedienelementes ein Anschlag entsteht, der so vorgesehen ist, daß ein als Tasteinheit vorgesehener schaltender Tastkopf mit einer optimalen Antastgeschwindigkeit verfahren wird.

20. Koordinatenmeßgerät nach Anspruch 2 mit einem Bedienelement mit einer vorgegebenen Ruhestellung und einem messenden Tastkopf mit Taster als Tasteinheit, wobei die Kraft von der Funktionsbaugruppe derart vorgegeben wird, daß das Bedienelement solange der Taster das Werkstück antastet aus seiner Neutralstellung in Antastrichtung ausgelenkt ist.

21. Koordinatenmeßgerät nach Ansprüchen 1 bis 17, wobei die Krafteinheit ein Elektromotor ist, der die Kraft erzeugt.

## Claims

1. Coordinate measuring apparatus having at least one scanning unit (34) for scanning a workpiece (15) to be measured, said apparatus having
- a mechanism (33) which can be used to move the scanning unit in the three coordinate directions (X, Y, Z),
- a plurality of drives (18) which can be used to drive the mechanism for moving the scanning unit,
- a manually actuable operating element (11, 12) which can be used to control the drives, a force unit being able to apply a force to the operating element in accordance with specific conditions in the measuring procedure.

2. Coordinate measuring apparatus according to Claim 1, a functional module (controller 22) which is connected to the operating element and controls the application of the force to the operating element being provided.

3. Coordinate measuring apparatus according to Claim 1 or 2, the force being approximately proportional to the acceleration of the mechanism in the coordinate direction controlled by the operating element.

4. Coordinate measuring apparatus according to Claim 3, the force being selected to be approximately proportional to the mass inertia force which arises when the mechanism accelerates.

5. Coordinate measuring apparatus according to Claim 3 or 4, the force unit being a mass which is coupled to the operating element, is to be accelerated and is accelerated when the operating element is actuated.

6. Coordinate measuring apparatus according to Claim 5, the mass being either a rotatable disc or a body which is guided in a linearly movable manner.

7. Coordinate measuring apparatus according to Claim 6, the mass being connected to the operating element by means of a gear mechanism.

8. Coordinate measuring apparatus according to Claim 6, the mass being rigidly connected to the operating element.

9. Coordinate measuring apparatus according to Claim 3 or 4, the functional module deriving the applied force either from the signal from at least one acceleration sensor that is fastened to the mechanism, from the signals for the drives of the coordinate measuring apparatus (18) or from the signal (Vx, Vy, Vz) from the operating element itself.

10. Coordinate measuring apparatus according to Claim 2, the functional module applying the force in such a manner that at least one preferred direction in which the operating element or elements can preferably be actuated results when the operating element is operated.

11. Coordinate measuring apparatus according to Claim 10, in which, when at least one operating element is deflected, the functional module applies said force to the operating element or elements in accordance with the deflection in such a manner that a constant ratio between the deflections of the operating element or elements, which corresponds to the preferred direction, results for the different coordinate directions.

12. Coordinate measuring apparatus according to Claim 10 or 11, the scanning unit being an optical probe head, and the preferred direction being predefined by the functional module in such a manner that the scanning unit is moved along the scanning beam when the operating elements are actuated in the preferred direction.

13. Coordinate measuring apparatus according to Claim 10 or 11, the functional module predefining a plurality of preferred directions which are selected in such a manner that the scanning unit can be moved along the axes of a coordinate system (Xw, Yw, Zw), which is rotated relative to the coordinate directions (X, Y, Z) predefined by the mechanism, when the operating elements are actuated in the preferred directions.

14. Coordinate measuring apparatus according to Claim 10 or 11, the scanning unit being a switching probe head with a probe which can be moved relative to the probe head, and the preferred direction (U̅) being predefined by the functional module in such a manner that the probe head is moved to the last valid position of contact (Xp, Yp, Zp) when the operating elements are actuated in the preferred direction.

15. Coordinate measuring apparatus according to Claim 14, the functional module applying the preferred direction as long as the probe is deflected from its position of rest.

16. Coordinate measuring apparatus according to Claim 10 or 11, the scanning unit being a measuring probe head with a probe which can be deflected relative to the probe head, and the functional module selecting the preferred direction counter to the direction of the measuring forces acting perpendicular to the direction of contact.

17. Coordinate measuring apparatus according to Claim 10 or 11, the scanning unit being a measuring probe head with a probe which can be deflected relative to the probe head, and the preferred direction in the state of contact being applied counter to the measuring force acting on the probe head.

18. Coordinate measuring apparatus according to Claim 2, the functional module applying the force in such a manner that operation of an operating element, which is not provided by the operator in the measuring procedure, is made noticeable by means of knocking.

19. Coordinate measuring apparatus according to Claim 2, the force being predefined by the functional module in such a manner that a stop is produced when the operating element is deflected, said stop being provided in such a manner that a switching probe head provided in the form of a scanning unit is moved at an optimum speed of contact.

20. Coordinate measuring apparatus according to Claim 2, said apparatus having an operating element with a predefined position of rest and a measuring probe head with a probe in the form of a scanning unit, the force being predefined by the functional module in such a manner that the operating element is deflected from its neutral position in the direction of contact as long as the probe is in contact with the workpiece.

21. Coordinate measuring apparatus according to Claims 1 to 17, the force unit being an electric motor which generates the force.

## Revendications

1. Appareil de mesure de coordonnées qui présente au moins une unité de palpage (34) qui palpe une pièce (15) à mesurer, et qui présente :
- un mécanisme (33) par lequel l'unité de palpage peut être déplacée dans les trois directions de coordonnées (X, Y, Z),
- plusieurs entraînements (18) qui permettent d'entraîner le mécanisme de déplacement de l'unité de palpage,
- un élément de commande (11, 12) apte à être actionné à la main et qui permet de commander les entraînements, une force pouvant être appliquée sur l'élément de commande par une unité d'application de force en fonction de conditions spécifiques du déroulement de la mesure.

2. Appareil de mesure de coordonnées selon la revendication 1, dans lequel un module fonctionnel (contrôleur 22) relié à l'élément de commande est prévu pour commander l'application de la force sur l'élément de commande.

3. Appareil de mesure de coordonnées selon les revendications 1 ou 2, dans lequel la force est approximativement proportionnelle à l'accélération du mécanisme dans la direction de coordonnées imposée par l'élément de commande.

4. Appareil de mesure de coordonnées selon la revendication 3, dans lequel la force sélectionnée est approximativement proportionnelle à l'inertie qui intervient lors de l'accélération du mécanisme.

5. Appareil de mesure de coordonnées selon les revendications 3 ou 4, dans lequel l'unité d'application de force est une masse accouplée à l'élément de commande et qui doit être accélérée lors de l'actionnement de l'élément de commande.

6. Appareil de mesure de coordonnées selon la revendication 5, dans lequel la masse est un disque rotatif ou un corps guidé à déplacement linéaire.

7. Appareil de mesure de coordonnées selon la revendication 6, dans lequel la masse est reliée à l'élément de commande par une transmission.

8. Appareil de mesure de coordonnées selon la revendication 6, dans lequel la masse est reliée rigidement à l'élément de commande.

9. Appareil de mesure de coordonnées selon les revendications 3 ou 4, dans lequel le module fonctionnel déduit la force à appliquer du signal d'au moins une sonde d'accélération fixée sur le mécanisme, des signaux pour les entraînements de l'appareil (18) de mesure de coordonnées ou du signal (Vx, Vy, Vz) de l'élément de commande proprement dit.

10. Appareil de mesure de coordonnées selon la revendication 2, dans lequel le module fonctionnel applique la force de telle sorte que lorsque l'élément de commande est actionné, on obtient au moins une direction préférentielle dans laquelle le ou les éléments de commande peuvent être actionnés de préférence.

11. Appareil de mesure de coordonnées selon la revendication 10, dans lequel en cas d'extraction d'au moins un élément de commande, le module fonctionnel applique ladite force sur le ou les éléments de commande en fonction de l'extraction de telle sorte que l'on obtienne un rapport constant, qui correspond à la direction préférentielle, entre les extractions du ou des éléments de commande dans les différentes directions de coordonnées.

12. Appareil de mesure de coordonnées selon les revendications 10 ou 11, dans lequel l'unité de palpage est une tête de palpage optique et la direction préférentielle est prédéterminée par le module fonctionnel de telle sorte qu'en cas d'actionnement des éléments de commande dans la direction préférentielle, l'unité de commande est déplacée le long du faisceau de commande.

13. Appareil de mesure de coordonnées selon les revendications 10 ou 11, dans lequel le module fonctionnel définit plusieurs directions préférentielles sélectionnées de telle sorte que lors de l'actionnement des éléments de commande dans les directions préférentielles, l'unité de palpage peut être déplacée le long des axes d'un système de coordonnées (Xw, Yw, Zw) tourné par rapport aux directions de coordonnées (X, Y, Z) prédéterminées par le mécanisme.

14. Appareil de mesure de coordonnées selon les revendications 10 ou 11, dans lequel l'unité de palpage est une unité de palpage à commutation dotée d'un palpeur mobile par rapport à la tête de palpage et la direction préférentielle (U) est prédéterminée par le groupe fonctionnel de telle sorte que lorsque les éléments de commande sont actionnés dans la direction préférentielle, la tête de palpage est déplacée vers la dernière position de palpage valide (Xp, Yp, Zp).

15. Appareil de mesure de coordonnées selon la revendication 14, dans lequel le module fonctionnel branche la direction préférentielle tant que le palpeur est sorti de sa position de repos.

16. Appareil de mesure de coordonnées selon les revendications 10 ou 11, dans lequel l'unité de palpage est une tête de palpage de mesure dotée d'un palpeur qui peut être extrait de la tête de palpage, le module fonctionnel sélectionnant la direction préférentielle dans la direction opposée aux forces de mesure qui agissent perpendiculairement à la direction de palpage.

17. Appareil de mesure de coordonnées selon les revendications 10 ou 11, dans lequel l'unité de palpage est une tête de palpage de mesure dotée d'un palpeur qui peut être extraite de la tête de palpage, la direction préférentielle étant en position de palpage orientée en opposition à la force de mesure qui agit sur la tête de palpage.

18. Appareil de mesure de coordonnées selon la revendication 2, dans lequel le groupe fonctionnel applique la force de telle sorte que l'actionnement d'un élément de commande non prévu dans le déroulement de mesure par l'opérateur est détecté à l'aide d'un cliquetis.

19. Appareil de mesure de coordonnées selon la revendication 2, dans lequel la force est prédéterminée par le module fonctionnel de telle sorte que lorsque l'élément de commande est extrait, il apparaît une butée prévue de telle sorte qu'une tête de palpage de commutation prévue comme unité de palpage est déplacée à une vitesse de palpage optimale.

20. Appareil de mesure de coordonnées selon la revendication 2, doté d'un élément de commande qui présente une position de repos prédéterminée et une tête de palpage de mesure dotée d'un palpeur servant d'unité de palpage, la force étant définie par le module fonctionnel de telle sorte que l'élément de commande est sorti de sa position neutre dans la direction de palpage tant que le palpeur palpe la pièce.

21. Appareil de mesure de coordonnées selon les revendications 1 à 17, dans lequel l'unité d'application de force est un moteur électrique qui crée la force.
